# EUROPEAN PATENT APPLICATION

(11) **EP 2 747 460 A1**
(43) Date of publication of application: **25.06.2014**
(21) Application number: 12198582.4
(22) Date of filing: 20.12.2012
(51) Int. Cl.: H04W 4/00, H04W 12/06, H04L 29/06, H04L 29/08

(54) **Provisioning a user device in a network subsystem**

(71) Applicant: Koninklijke KPN N.V., 2516 CK The Hague (NL)
(72) Inventor: Veenstra, Pieter, 2518 HR The Hague (NL); Span, Pieter, 3826CN Amersfoort (NL)
(74) Representative: Wuyts, Koenraad Maria

(57) **Abstract**

Provisioning system (120) for provisioning a user device (020) in a network subsystem (100), the provisioning system comprising:
- a network interface (122) for receiving a notification comprising an identification of the user device (020) and being indicative of an authenticated user device (040), the authenticated user device being authenticated to the network subsystem; and
- a processing subsystem (124) for:
i) based on the notification being indicative of the authenticated user device, locating a user profile (150), which includes an entry (510) for the authenticated user device, on a user profile server (140) of the network subsystem;
ii) obtaining authorization for provisioning the user device (020) in the network subsystem based on communication with the authenticated user device (040); and
iii) based on the authorization, provisioning the user device (020) in the network subsystem by creating an entry (514) for the user device in the user profile (150).

## Description

### FIELD OF THE INVENTION

The invention relates to a provisioning system for provisioning a user device in a network subsystem. The invention further relates to a method of using equipment of a network subsystem for provisioning the user device in the network subsystem, and to control software comprising instructions operative for executing the steps of the method on equipment of the network subsystem. The invention further relates to a network subsystem, such as an Internet protocol Multimedia Subsystem, comprising the provisioning system.

### BACKGROUND OF THE INVENTION

Telecommunication networks, such as cellular networks or fixed-line networks, have seen extensive change over the last decade. A significant part of the change has been in response to the growing popularity of Internet Protocol (IP) based services. In order to enable such services in existing telecommunication networks, network subsystems have been introduced which enable merging existing services of the telecommunication network with IP based services. A well known example of such a network subsystem is the so-termed Internet protocol Multimedia Subsystem (IMS), which enables a network operator to, amongst others, provide IP based multimedia services to its subscribers.

In order to utilize the services provided by the network subsystem, a user device, such as a Smartphone, a tablet device, etc., typically needs to be provisioned in the network subsystem. Here, the term *provisioning* refers to establishing data in the network subsystem which allows the network subsystem to associate the user device with a user of the network subsystem, i.e., with a subscriber. For example, in IMS, a user device may be provisioned by creating an entry for the user device in a user profile of the user stored in a Home Subscriber Server (HSS) of the network subsystem. Here, the HSS or its functionality is also referred to by the term User Profile Server Function (UPSF).

It is known to provision a user device by means of Customer Relation Management (CRM) processes. For example, if a user purchases a user device from a store of the network operator, the staff at the store may initiate provisioning of the purchased user device in the network subsystem of the network operator by putting in an order in an internal CRM system of the network operator. Similarly, the user may call a helpdesk of the network operator to request provisioning of a new user device.

The user may be required to identify him/herself during such CRM processes, e.g., by showing an identity card or providing identity details over the phone. As such, it may be ensured that the user is authorized to request the provisioning of the user device.

### SUMMARY OF THE INVENTION

Disadvantageously, such CRM-based provisioning of a user device involves substantial effort from the user and/or from the network operator.

It would be advantageous to enable provisioning a user device in a network subsystem in a more automatic manner, i.e., with less human intervention.

To better address this concern, a first aspect of the invention provides a provisioning system for provisioning a user device in a network subsystem, the provisioning system comprising:
- a network interface for receiving a notification comprising an identification of the user device and being indicative of an authenticated user device, the authenticated user device being authenticated to the network subsystem; and
- a processing subsystem for:
   i) based on the notification being indicative of the authenticated user device, locating a user profile, which includes an entry for the authenticated user device, on a user profile server of the network subsystem;
   ii) obtaining authorization for provisioning the user device in the network subsystem based on communication with the authenticated user device; and
   iii) based on the authorization, provisioning the user device in the network subsystem by creating an entry for the user device in the user profile.

A further aspect of the invention provides a method of using network equipment for provisioning a user device in a network subsystem, the method comprising:
- receiving a notification comprising an identification of the user device and being indicative of an authenticated user device, the authenticated user device being authenticated to the network subsystem;
- based on the notification being indicative of the authenticated user device, locating a user profile, which includes an entry for the authenticated user device, on a user profile server of the network subsystem;
- obtaining authorization for provisioning the user device in the network subsystem based on communication with the authenticated user device; and
- based on the authorization, provisioning the user device in the network subsystem by creating an entry for the user device in the user profile.

A further aspect of the invention provides control software for provisioning a user device in a network subsystem, the control software comprising instructions for execution on network equipment, the instructions being operative for:
- receiving a notification comprising an identification of the user device and being indicative of an authenticated user device, the authenticated user device being authenticated to the network subsystem;
- based on the notification being indicative of the authenticated user device, locating a user profile, which includes an entry for the authenticated user device, on a user profile server of the network subsystem;
- obtaining authorization for provisioning the user device in the network subsystem based on communication with the authenticated user device; and
- based on the authorization, provisioning the user device in the network subsystem by creating an entry for the user device in the user profile.

The above measures are carried out by network equipment, such as a provisioning system comprised in or connected to the network subsystem. The user device is connected to the network subsystem, e.g., via an access network. However, the user device has not been provisioned yet in the network subsystem. As a consequence, the user device is unable to utilize many, if not most, of the services provided by the network subsystem.

The provisioning of the user device by the provisioning system is performed as follows. The provisioning system receives a notification. The notification identifies the user device, e.g., in the form of a network address such as an IP address, a device identifier, etc. In effect, the notification serves to notify the provisioning system about the user device. Moreover, the notification is indicative of an authenticated device in that it enables the provisioning system to obtain an identification of the authenticated device. For example, the notification may comprise an identification of the authenticated user device or an identification of a user of the authenticated user device. The authenticated user device is authenticated to the network subsystem, e.g., in manner known per se from the field of network security. Based on the notification being indicative of the authenticated user device, the provisioning system searches for a user profile of a user on a user profile server of the network subsystem, i.e., on a server which stores user profiles of users. The user profile includes an entry for the authenticated user device. Here, the term *entry* refers to information being included in the user profile which identifies the authenticated user device to the network subsystem. It will be appreciated that if the notification comprises an identification of the authenticated user device, the user profile may be located by searching for the entry of the authenticated user device. If the notification comprises an identification of the user, the user profile may be located directly, and the identification of the authenticated user device may be obtained from the user profile.

The provisioning system obtains authorization for provisioning the user device in the network subsystem. Thus, the provisioning system does not autonomously provision the user device in the network subsystem, but rather obtains authorization beforehand. For that purpose, the provisioning system makes use of the authenticated user device in that a communication with the authenticated user devices takes place to obtain the authorization. Here, the term *communication with* refers to a communication to and/or from the authenticated user device. Hence, the authenticated user device is involved in providing the authorization for provisioning the user device in the network subsystem. Given the authorization, the user device is provisioned in the network subsystem by creating an entry for the user device in the user profile. As such, information is included in the user profile which identifies the user device to the network subsystem.

The above measures have the effect that an authenticated user device is used in provisioning the user device in the network subsystem. The authenticated user device is authenticated to the network subsystem and thus considered trustworthy. By obtaining authorization for provisioning the user device in the network subsystem based on communication with the authenticated user device, the authenticated user device is being involved in the providing the authorization. Here, the authenticated user device may act as a trustworthy interface to the user, or as a trustworthy substitute for the user. Moreover, by the entry for the user device being created in the same user profile which includes the entry for the authenticated user device, tempering in the form of adding a user device to a first user's profile while using a second user's authenticated user device is prevented or reduced.

An advantage of the present invention is that the user does not need to manually initiate or request the provisioning of the user device via CRM processes such as a helpdesk. Rather, the provisioning system automatically initiates the provisioning of the user device in response to receiving the notification. Another advantage of the present invention is that the user device may utilize services provided by the network subsystem.

In an embodiment, obtaining the authorization comprises querying the user via the authenticated user device to authorize said provisioning of the user device. The provisioning system thus obtains authorization from the user by querying the user via the authenticated user device. The authenticated user device effectively functions as a credential for the user in that the provisioning system does not have to establish the authenticity of the user itself but instead uses an authenticated user device of which the authenticity has been established and which, to a high degree of probability, is being used by said user. The authorization for provisioning the user device is thus obtained in a relatively secure manner. Nevertheless, the user is still involved minimally, i.e., by only having to provide the authorization and therefore without having to, e.g., call a helpdesk.

In a further embodiment, querying the user comprises sending an authorization token to the authenticated user device for enabling the user to authorize said provisioning of the user device by providing a response to the provisioning system based on the authorization token. The user is thus provided with an authorization token, and provides the authorization by returning a response to the provisioning system which is based on the authorization token, e.g., by being derived from or directly constituted by the authorization token. The authorization token may be delivered to the user using various services provided by the network subsystem, e.g., Short Message Service (SMS) or other forms of notification. The user may return the response in separation of the authenticated user device, e.g., using a different device. Nevertheless, the authorization for provisioning the user device is still obtained in a secure manner as it involves the authenticated user device.

In a further embodiment, the processing subsystem is arranged for establishing a logical connection in the user profile between the entry of the user device and an entry of a selected authenticated user device included in the user profile. By establishing a logical connection between the entries of the user device and a selected authenticated user device, the user device is bound to the selected authenticated user device. This provides the advantage that the user device is associated with the selected authenticated user device. A further advantage is that recorded information of the selected authenticated user device in the user profile, such as service preferences, service capabilities, network addresses, etc, may supplement or act as substitute for such information of the user device.

In a further embodiment, the logical connection is established to a private user identity of the selected authenticated user device. A private user identity is typically associated with a public user identity so as to allow communication with the selected authenticated user device, e.g., by the public user identity providing an address such as a fixed-line telephone number, a mobile telephone number, an e-mail address, an IP address, etc. By having a logical connection with the private user identity of the selected authenticated user device, the user device is associated with at least part of said public user identity. A further advantage is that user device may be addressable using said public user identity.

In a further embodiment, the selected authenticated user device is the authenticated user device. The logical connection is thus established in the user profile between the user device and the authenticated user device identified by the notification.

In a further embodiment, the user profile includes a plurality of entries for a respective plurality of authenticated user devices, and the processing subsystem is arranged for selecting the selected authenticated user device amongst the plurality of authenticated user devices based on a correspondence with the user device in device type and/or device location. The processing subsystem thus determines a similarity between the user device and the selected authenticated user device in terms of device type and/or device location. Here, the device type may distinguish between, e.g., mobile and non-mobile user devices. The device location may be a network location and/or a physical location. An advantage of this embodiment is that an authenticated user device may be selected which is most similar to the user device in terms of device type and/or device location.

In a further embodiment, the user profile includes a plurality of entries for a respective plurality of authenticated user devices, and the provisioning system is arranged for receiving selection data from the user identifying one of the plurality of authenticated user devices, thereby establishing the selected authenticated user device. The user can thus select which one of a plurality of authenticated user devices is to be associated with, i.e., bound to, the user device. As such, the user can select an authenticated user device which is similar to the user device in terms of device type, device location, etc.

In a further embodiment, the selection data is received from a web page which enables the user to select amongst the plurality of authenticated user devices. A web page is a convenient form for enabling the user to establish the selected authenticated user device.

In a further embodiment, the processing subsystem is arranged for obtaining said authorization only after the user profile which includes the entry for the authenticated user device was located. As such, communication with the authenticated user device only takes place after a user profile could be found which comprises the entry for the authenticated user device. Therefore, tempering or other malicious intent can be earlier detected.

In a further embodiment, the authenticated user device is a mobile user device. Here, the term *mobile user device* refers to a user device which is connectable to a mobile network.

In a further embodiment, a network subsystem is provided comprising the above provisioning system.

In a further embodiment, the network subsystem is an Internet Protocol Multimedia Subsystem.

It will be appreciated by those skilled in the art that two or more of the above-mentioned embodiments, implementations, and/or aspects of the invention may be combined in any way deemed useful.

Modifications and variations of the method and/or the control software, which correspond to the described modifications and variations of the provisioning system, can be carried out by a person skilled in the art on the basis of the present description. The invention may also be implemented by network equipment other than a provisioning system.

The invention is defined in the independent claims. Advantageous yet optional embodiments are defined in the dependent claims.

### BRIEF DESCRIPTION OF THE DRAWINGS

These and other aspects of the invention are apparent from and will be elucidated with reference to the embodiments described hereinafter. In the drawings,
Fig. 1 shows a network subsystem comprising a provisioning system for provisioning a user device in the network subsystem;
Fig. 2 shows a method of using network equipment, such as the provisioning system, to provision the user device in the network subsystem;
Fig. 3 shows a computer readable medium comprising control software for executing the steps of the method on network equipment such as the provisioning system;
Fig. 4a shows an example of the provisioning of the user device when the user device is connected to the network subsystem via a wireless hotspot;
Fig. 4b shows a message exchange for the provisioning; and
Fig. 5 illustrates creating an entry for the user device in a user profile.
It should be noted that items which have the same reference numbers in different Figures, have the same structural features and the same functions, or are the same signals. Where the function and/or structure of such an item has been explained, there is no necessity for repeated explanation thereof in the detailed description.

### DETAILED DESCRIPTION OF EMBODIMENTS

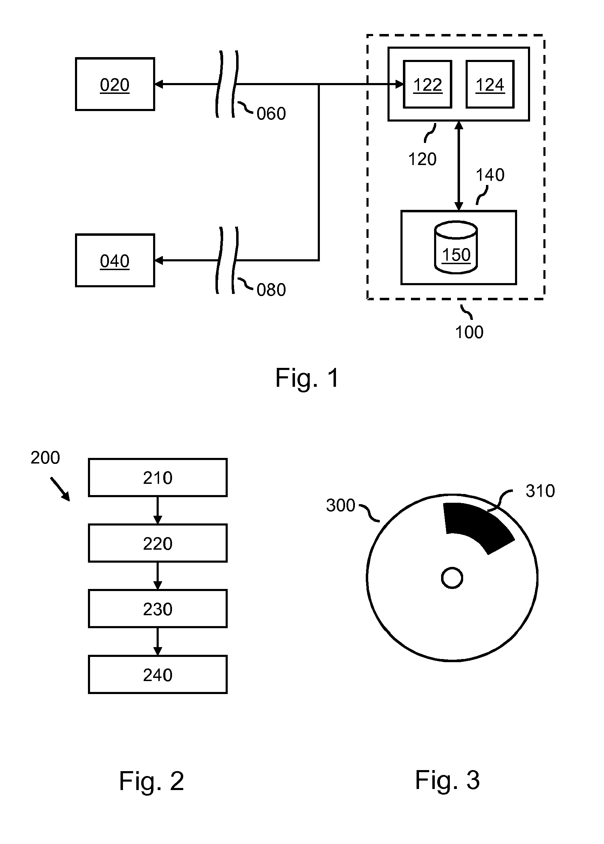

Fig. 1 shows a provisioning system 120 for provisioning a user device in a network subsystem 100. In the example of Fig. 1, the provisioning system 120 is shown to be comprised in, i.e., part of, the network subsystem 100. Alternatively, the provisioning system 120 may be located outside of the network subsystem 100, e.g., in a different network subsystem, while being connected to the network subsystem 100. In general the provisioning system may be part of a network which comprises the network subsystem 100. The provisioning system 120 comprises a network interface 122 and a processing subsystem 124, with their function being explained further onwards. The network subsystem 100 is indicated in Fig. 1 as a dashed rectangle, and further comprises a user profile server 140.

It will be appreciated that a network subsystem 100 typically comprises other functional elements. However, these have been omitted in Fig. 1 for clarity reasons. Moreover, it will be appreciated the functionality of the provisioning system 120 may be embodied by various network equipment of the network, such as an application server or an application server function being executed on other network equipment. Hence, an embodiment of the provisioning system 120 may be an application server.

Fig. 1 further shows a user device 020 being connected to the network subsystem 100. Typically, such a connection between a user device 020 and the network subsystem 100 takes place via an access network 060. An example of an access network is a mobile access network such as a Universal Mobile Telecommunications System (UTMS) or Long Term Evolution (LTE) access network. Another example of an access network is a wired access network such as a Digital Subscriber Line (DSL) or a Fiber-optic access network. The user device 020 is not provisioned in the network subsystem 100. In particular, the user device 020 is not provisioned in the network subsystem 100 by the user device lacking an entry in a user profile 150 of the user profile server 140.

Fig. 1 shows an authenticated user device 040 being connected to the network subsystem 100 via a further access network 080, i.e., a different access network than used by the user device 020. However, this is not a limitation, in that both user devices 020, 040 may be connected to the network subsystem 100 via a same access network. The authenticated user device 040 is provisioned in the network subsystem 100 by comprising an entry in the user profile 150. In addition, the authenticated user device 040 is authenticated to the network subsystem 100, e.g., in a manner as known per se from the field of network security.

An operation of the provisioning system 120 may be briefly explained as follows. The network interface 122 receives a notification comprising an identification of the user device 020 and being indicative of the authenticated user device 040. The processing subsystem 124 uses the notification being indicative of the authenticated user device to locate a user profile 150 of the user on a user profile server 140 of the network subsystem which comprises an entry for the authenticated user device 040. The processing subsystem 124 obtains authorization for provisioning the user device 020 in the network subsystem based on communication with the authenticated user device 040. Based on the authorization, the processing subsystem 124 then provisions the user device 020 in the network subsystem by creating an entry for the user device 020 in the user profile 150. For that purpose, the identification of the user device may be used.

Fig. 2 shows a method 200 of using network equipment such as the provisioning system to provision a user device in a network subsystem. As such, the method 200 may correspond to an operation of the provisioning system. It will be appreciated, however, that the method 200 may also be performed in separation of the provisioning system, e.g., using other network equipment of the network subsystem.

The method 200 comprises, in a first step titled "RECEIVING NOTIFICATION IDENTIFYING USER DEVICE", receiving a notification 210 comprising an identification of the user device and being indicative of an authenticated user device, the authenticated user device being authenticated to the network subsystem. The method 200 further comprises, in second a step titled "LOCATING USER PROFILE OF USER", based on the notification being indicative of the authenticated user device, locating 220 a user profile, which includes an entry for the authenticated user device, on a user profile server of the network subsystem. The method 200 further comprises, in a third step titled "OBTAINING AUTHORIZATION USING AUTHENTICATED USER DEVICE", obtaining 230 authorization for provisioning the user device in the network subsystem based on communication with the authenticated user device. The method 200 comprises, in a fourth step titled "PROVISIONING USER DEVICE BASED ON AUTHORIZATION", based on the authorization, provisioning 240 the user device in the network subsystem by creating an entry for the user device in the user profile.

It is noted that the steps of the method 200, and the corresponding operations of the provisioning system, may be performed in any suitable order. For example, the third step may be performed before or simultaneously with the second step.

Fig. 3 illustratively shows control software 310 comprising instructions for executing the steps of the method 200 on network equipment such as the provisioning system. The control software 310 may be comprised on a computer readable medium 300, for example in the form of as a series of machine readable physical marks and/or as a series of elements having different electrical, e.g., magnetic, or optical properties or values.

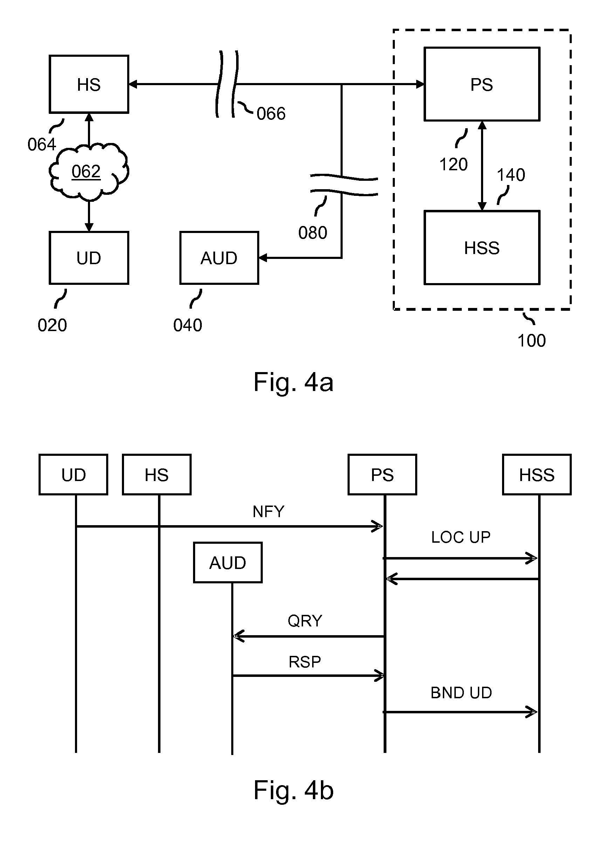

The present invention will be further explained in reference to Figs. 4a-5. Here, the network subsystem 100 is an IMS, and the user profile server in an HSS. It will be appreciated, however, that the following aspects of the invention are also applicable in general to network subsystems and user profile servers comprised therein.

Fig. 4a shows an example of the provisioning of the user device when the user device is connected to the network subsystem via a wireless hotspot. In particular, Fig. 4a relates to obtaining authorization for provisioning the user device by querying the user via the authenticated user device to authorize said provisioning of the user device. In Fig. 4a, the user device 020 is connected to the IMS 100 via a hotspot 064. The hotspot 064 provides wireless access 062 to the user device 020 and effectively forms part of the access network 060. The hotspot 064 is shown to be connected to the IMS 100 via a wired portion 066 of the access network 060. Fig. 4a further shows an authenticated user device 040 being connected to the IMS 100 via a further access network 080. The further access network 080 may be a mobile network if the authenticated user device is a mobile user device. However, both user devices 020, 040 may equally be connected to the IMS 100 via a same access network.

Fig. 4b shows an example of communication from the provisioning system to the authenticated user device by which the authorization for provisioning the user device is provided, and in particular, by which the user queried. Each of the devices and servers is indicated in Fig. 4b by means of their abbreviation, namely UD for user device 020, HS for hotspot 064, AUD for authenticated user device 040, PS for provisioning system 120, and HSS for home subscriber server 140. The vertical axis corresponds to time.

The message exchange may be as follows. The user device UD may send a notification to the provisioning system PS via the hotspot HS in the form of a message titled "NFY". The provisioning system PS may then, based on the message, locate a user profile of the user on the HSS which comprises an entry for authenticated user device AUD. For that purpose, a message exchange titled "LOC UP" may take place between the provisioning system PS and the HSS. Having located a user profile, the provisioning system PS may then obtain authorization for provisioning the user device UD in the IMS by querying the user via the authenticated user device AUD to authorize said provisioning of the user device. Such a query may be effected by the provisioning system PS sending a message titled "QRY" to the authenticated user device AUD, i.e., via the further access network. In response, the authenticated user device AUD may present the query to the user, e.g., in the form of a notification such as a pop-up window. Having obtained the authorization from the user, the authenticated user device AUD may provide a response to the provisioning system PS by sending a message titled "RSP". Finally, upon receipt of the authorization from the authenticated user device AUD, the provisioning system PS may provision the user device UD in the IMS by creating an entry for the user device UD in the user profile, e.g., by means of sending message titled "ADD UD" to the HSS.

In the above message exchange, the locating of the user profile takes place before obtained authorization from the authenticated user device AUD. A reason for this may be that the notification may not comprise an identification of the authenticated user device. Instead, the notification may comprise an identification of the user. Hence, the notification may not directly identify the authenticated user device but may rather be indicative thereof. As such, the provisioning system PS may first locate the user profile of the user in order to identify the authenticated user device AUD from the user profile, e.g., by means of the aforementioned message exchange titled "LOC UP". Alternatively or additionally, the notification may comprise an identification of the authenticated user device AUD. In this case, the provisioning system may directly obtain authorization from the authenticated user device AUD, and only afterwards locate the user profile on the HSS.

It is noted that the initial notification from the user device UD to the applications server PS may be provided in the form of a request to the provisioning system PS to provision the user device UD. For example, the message titled "NFY" may be sent to the provisioning system PS as a result of the user visiting a web page on the user device UD. The web page may be a so-termed landing page, i.e., an initial web page which is presented per default to the user when accessing the Internet from the hotspot HS. The user may then fill in user information, such as a subscriber identification, or device information, such as a mobile phone number of an authenticated user device AUD on the web page and press a "submit" button on the web page, thereby causing the user device UD to send the message titled "NFY" to the provisioning system PS. Alternatively, a web-server hosting the web page or an associated server may send the message to the provisioning system PS in response to the user pressing "submit". Hence, in general, it is not needed that the notification is provided by the user device UD. Rather, it is sufficient that the notification identifies the user device ID and is indicative of the authenticated user device, for example by providing a mobile phone number or by providing other information which allows locating of the user profile and thus locating the identification of the authenticated user device in the user profile.

Moreover, it will be appreciated that, although shown this way in Fig. 4b, that the authenticated user device AUD does not need to return the response to the query. Rather, the user may use a different device to return the response to the provisioning system PS. For that purpose, the provisioning system may provide an authorization token to the authenticated user device AUD. The user may then authorize the provisioning of the user device UD by returning a response to the provisioning system PS based on the authorization token. Such a response may then be returned using any suitable device. For example, the user may provide the response to the query using the user device UD itself or a device of a different user.

It is noted that the authenticated user device AUD may be a mobile phone, e.g., a Smartphone, which is connected via an UMTS/LTE access network to the IMS. The user typically has a mobile phone readily available, and hence is able to easily respond to a query provided on the mobile phone. The querying may be in the form of, e.g., a SMS, an Instant Messaging (IM) message, an e-mail or in any other suitable form.

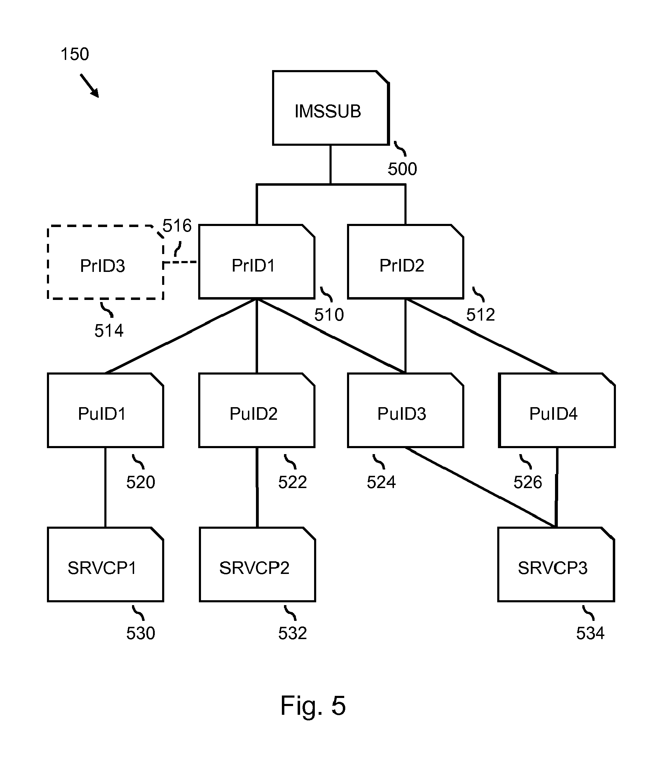

In general, the processing subsystem may be arranged for establishing a logical connection in the user profile 150 between the entry of the user device and an entry of a selected authenticated user device included in the user profile. Fig. 5 shows an example of such a user profile 150 in the form of an IMS user profile as stored in the HSS.

In Fig. 5, the blocks denote information entries in the user profile, and lines between the depicted blocks denote logical connections between the information entries, thereby providing a hierarchical structuring of the entries. Such logical connections are also referred to as bindings, in that an entry is bound to another entry using the logical connection.

Fig. 5 shows a root block 500 which is an IMS subscription entry for a particular user in the user profile. Fig. 5 further shows two private user identities 510, 512 which each may be assigned to a Session Initiation Protocol (SIP) User Agent (UA), with the SIP UA being typically provided by a device of the user. For example, the first private user identity 510 may be associated with a Smartphone of the user, and the second private user identity 512 may be associated with a home gateway of the user. The user profile is shown to further comprise a number of public user identities 520-526. Here, a first, second and third public user identity 520-524 are shown to be connected to the first private user identity 510, and the third and a fourth public user identity 524, 526 are shown to be connected to the second private user identity 512. The public user identities allow the corresponding devices to be addressed from within the IMS, and may comprise, e.g., a phone number, an e-mail address, a network address such as an IP address, a Uniform Resource Locator (URL), etc.

In the example of Fig. 5, the public user identities 520-526 are further shown to be connected to service profiles 530-534, namely, by way of example, the first public user identity 520 being connected to a first service profile 530, the second public user identity 522 being connected to a second service profile 532, and the third and fourth public user identities 524, 526 being each connected to a third service profile 534.

Fig. 5 shows a result of the provisioning system creating an entry for the user device in the user profile 150. Here, the entry is created in the form of a third private user identity 514 which identifies the user device. The provisioning system may further establish a logical connection 516 between the third private user identity 514 of the user device and an entry of an authenticated user device. In particular, the provisioning system may establish the logical connection with a private user identity of the authenticated device. In the example of Fig. 5, the third private user identity 514 of the user device is shown to be connected to the first private user identity 510. As such, the user device may be addressable from within the IMS based on the public user identity of the authenticated user device. It is noted that, alternatively, the third private user identity 514 may be established in another database in the IMS, and an entry for the user device may be added in the HSS in the form of a cross-reference from the HSS to the third private user identity 514 in the other database.

Fig. 5 shows the user device being bound to the private user identity of the authenticated user device as identified by the notification, e.g., the Smartphone. Although not shown in Fig. 5, the provisioning system may be arranged for enabling the user to select one of the authenticated user devices to which the entry of the user device is bound, e.g., by receiving selection data from the user. For example, a web page may be provided which enables the user to select amongst a plurality of authenticated user devices. The selection may also be presented to the user as part of the query. For example, when querying the user to obtain authorization for provisioning the user device, the user may also be queried on to which one of the plurality of authenticated user devices the user device is to be bound. The selection may also be automatic. For example, the provisioning system may bind the entry of the user device to an entry of an authenticated user device which is most similar in device type. As such, an entry of a mobile user device may be bound to an entry of a mobile authenticated user device such as a Smartphone, and an entry of a home user device may be bound to an entry of a home authenticated user device such as a home gateway. As such, the mobile user device may be addressable under the public user identity of the Smartphone.

Additionally or alternatively, the provisioning system may bind the entry of the user device to an entry of an authenticated user device which is most similar in device location. For example, if one of the authenticated user devices is located in a same local network as the user device, the entry of the user device may be bound to the entry of said authenticated user device. As a result, if the user device is located in a home network of the user, the entry of the user device may be bound to an entry of a home gateway of the user due to the home gateway also being located in said home network.

It is noted that various other forms of obtaining authorization based on communication with the authenticated user device are within the reach of the skilled person.

For example, instead of explicitly querying the user via the authenticated user device, the authenticated user device may be arranged for automatically providing said authorization in certain situations. For example, the authenticated user device may be arranged for wireless discovery of nearby user devices, e.g., via Bluetooth. In case the authenticated user device discovers the user device, it may automatically provide authorization if it receives a request for authorizing the provisioning of said user device. Here, authorization by the user may be assumed since the authenticated user device is located in close vicinity of the user device. Other forms of obtaining authorization from or via the authenticated user device are equally within the reach of the skilled person.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. Provisioning system (120) for provisioning a user device (020) in a network subsystem (100), the provisioning system comprising:
- a network interface (122) for receiving a notification comprising an identification of the user device (020) and being indicative of an authenticated user device (040), the authenticated user device being authenticated to the network subsystem; and
- a processing subsystem (124) for:
i) based on the notification being indicative of the authenticated user device, locating a user profile (150), which includes an entry (510) for the authenticated user device, on a user profile server (140) of the network subsystem;
ii) obtaining authorization for provisioning the user device (020) in the network subsystem based on communication with the authenticated user device (040); and
iii) based on the authorization, provisioning the user device (020) in the network subsystem by creating an entry (514) for the user device in the user profile (150).

2. Provisioning system (120) according to claim 1, wherein obtaining the authorization comprises querying the user via the authenticated user device (040) to authorize said provisioning of the user device (020).

3. Provisioning system (120) according to claim 2, wherein querying the user comprises sending an authorization token to the authenticated user device (040) for enabling the user to authorize said provisioning of the user device (020) by providing a response to the provisioning system (120) based on the authorization token.

4. Provisioning system (120) according to any one of the above claims, wherein the processing subsystem (124) is arranged for establishing a logical connection (516) in the user profile (150) between the entry (514) of the user device (020) and an entry (510) of a selected authenticated user device included in the user profile.

5. Provisioning system (120) according to claim 4, wherein the logical connection (516) is established to a private user identity (510) of the selected authenticated user device.

6. Provisioning system (120) according to claim 4 or 5, wherein the selected authenticated user device is the authenticated user device (040).

7. Provisioning system (120) according to claim 4 or 5, wherein the user profile (150) includes a plurality of entries (510, 512) for a respective plurality of authenticated user devices, and wherein the processing subsystem (124) is arranged for selecting the selected authenticated user device amongst the plurality of authenticated user devices based on a correspondence with the user device (020) in device type and/or device location.

8. Provisioning system (120) according to claim 4 or 5, wherein the user profile (150) includes a plurality of entries (510, 512) for a respective plurality of authenticated user devices, and wherein the provisioning system is arranged for receiving a selection from the user identifying one of the plurality of authenticated user devices, thereby establishing the selected authenticated user device.

9. Provisioning system (120) according to claim 8, wherein the selection is received from a web page which enables the user to select amongst the plurality of authenticated user devices.

10. Provisioning system (120) according to any one of the above claims, wherein the processing subsystem (124) is arranged for obtaining said authorization only after the user profile (150) which includes the entry (510) for the authenticated user device was located.

11. Provisioning system (120) according to any one of the above claims, wherein the authenticated user device (040) is a mobile user device.

12. Network subsystem (100) comprising the provisioning system (120) according to any one of the above claims.

13. Network subsystem (100) according to claim 12, wherein the network subsystem is an Internet Protocol Multimedia Subsystem.

14. Method (200) of using network equipment for provisioning a user device in a network subsystem, the method comprising:
- receiving a notification (210) comprising an identification of the user device and being indicative of an authenticated user device, the authenticated user device being authenticated to the network subsystem;
- based on the notification being indicative of the authenticated user device, locating (220) a user profile, which includes an entry for the authenticated user device, on a user profile server of the network subsystem;
- obtaining (230) authorization for provisioning the user device in the network subsystem based on communication with the authenticated user device; and
- based on the authorization, provisioning (240) the user device in the network subsystem by creating an entry for the user device in the user profile.

15. Control software (310) for provisioning a user device in a network subsystem, the control software comprising instructions for execution on network equipment, the instructions being operative for:
- receiving a notification (210) comprising an identification of the user device and being indicative of an authenticated user device, the authenticated user device being authenticated to the network subsystem;
- based on the notification being indicative of the authenticated user device, locating (220) a user profile, which includes an entry for the authenticated user device, on a user profile server of the network subsystem;
- obtaining (230) authorization for provisioning the user device in the network subsystem based on communication with the authenticated user device; and
- based on the authorization, provisioning (240) the user device in the network subsystem by creating an entry for the user device in the user profile.
